# EUROPÄISCHE PATENTSCHRIFT

(11) **EP 1 725 690 B1**
(45) Veröffentlichungstag und Bekanntmachung des Hinweises auf die Patenterteilung: **21.10.2009**
(21) Anmeldenummer: 05731900.6
(22) Anmeldetag: 17.03.2005
(51) Int. Cl.: C22B 21/00, C22B 9/00, F27B 7/16, F27D 1/00, C04B 35/76

(54) **DREHTROMMELOFEN MIT FEUERFESTEN RÜHRKÖRPERN ZUM UMSCHMELZEN VON ALUMINIUM**
ROTARY DRUM-TYPE KILN COMPRISING FIREPROOF STIRRING BODIES FOR REMELTING ALUMINIUM
FOUR A TAMBOUR ROTATIF DOTE D'ELEMENTS MELANGEURS REFRACTAIRES POUR REFONDRE L'ALUMINIUM

(30) Priorität: 19.03.2004 DE 202004004478 U
(43) Veröffentlichungstag der Anmeldung: 29.11.2006
(73) Patentinhaber: METALLHÜTTENWERKE BRUCH GMBH, 44145 Dortmund (DE)
(72) Erfinder: BRUCH, Karl, Hermann, 40885 Ratingen (DE)
(74) Vertreter: Schneiders, Josef
(86) Internationale Anmeldenummer: PCT/EP2005/002833
(87) Internationale Veröffentlichungsnummer: WO 2005/090620

(56) Entgegenhaltungen:
- DE-A1- 3 026 570
- DE-A1- 4 314 125
- DE-C1- 3 309 137
- DE-U1- 20 215 666
- US-A- 3 429 094
- US-A- 4 366 255
- US-A- 5 018 709
- US-B1- 6 395 221
- DATABASE WPI Section Ch, Week 199505 Derwent Publications Ltd., London, GB; Class L02, AN 1995-034187 XP002332320 & RO 107 928 B1 (INST CERC METALURGICE BUCURESTI) 31. Januar 1994 (1994-01-31)
- DATABASE WPI Section Ch, Week 200344 Derwent Publications Ltd., London, GB; Class L02, AN 2003-464502 XP002332321 & KR 2003 017 108 A (POSCO) 3. März 2003 (2003-03-03)
- DATABASE WPI Section Ch, Week 198530 Derwent Publications Ltd., London, GB; Class M22, AN 1985-182002 XP002332322 & JP 60 111747 A (HARIMA TAIKA RENGA KK) 18. Juni 1985 (1985-06-18)
- DATABASE WPI Section Ch, Week 199408 Derwent Publications Ltd., London, GB; Class L02, AN 1994-063275 XP002332323 & SU 1 788 410 A1 (AKMYANTSEMENAS PRODN ASSOC) 15. Januar 1993 (1993-01-15)
- PATENT ABSTRACTS OF JAPAN Bd. 015, Nr. 263 (C-0847), 4. Juli 1991 (1991-07-04) & JP 03 088777 A (KYUSHU REFRACT CO LTD), 15. April 1991 (1991-04-15)

## Beschreibung

Die Erfindung betrifft einen Drehtrommelofen zum Umschmelzen von Aluminium in einem aus einer Salzschmelze bestehenden Schutzbad, mit nach innen über die feuerfeste Ausmauerung des Drehtrommelofens vorstehenden Rührkörpern, die jeweils an einer in den Ofenmantel einsetzbaren Halteplatte befestigt sind und unter Verwendung einer hydraulisch oder chemisch abbindenden feuerfesten Gieß- oder Stampfmasse hergestellt sind.

Ein derartiger Drehtrommelofen ist beispielsweise aus der US 6 395 221 B1 bekannt. Bei dem aus dieser Druckschrift bekannten Drehtrommelofen bestehen die Rührkörper aus einem Kern aus Gußeisen und sind von einer Umhüllung aus einer feuerfesten Gießmasse umgeben.

Vergleichbare Rührer mit einem metallischen Kern und einen den Kern umhüllenden Masse zum Beispiel aus feuerfestem Beton ist aus der DE 202 15 666 U1 bekannt.

Weiterhin sind nach dem Stand der Technik (vgl. z. B. DE 30 26 570 A1, DE 43 14 125 A1 oder US A-4 366 255) hydraulisch oder chemisch abbindende feuerfeste Gieß- und Stampfmassen bekannt, die mit Stahlnadeln bewehrt sind und für mechanisch hoch belastete Teile im Ofenbau verwendet werden.

Der Nachteil der bekannten Rührer besteht darin, daß die ausgehärtete Gieß- oder Stampfmasse des Rührerkörpers in Folge der thermischen und mechanischen Beanspruchungen nach verhältnismäßig kurzer Zeit reißt und von dem stützenden metallischen Kern abbricht. Dabei wird die dem Abbrechen vorausgehende Rißbildung insbesondere dadurch gefördert, daß die ausgehärtete Gieß- oder Stampfmasse einerseits und der sie stützende metallische Kern andererseits ein unterschiedliches Wärmedehnungsverhalten haben und daß in Folge der schlechten Wärmeleitfähigkeit der Gieß- und Stampfmasse innerhalb des Rührkörpers große Temperaturdifferenzen auftreten. Aus den genannten Gründen haben die bekannten Rührkörper nur eine verhältnismäßig geringe Standzeit und müssen in kurzen Zeitabständen ausgewechselt werden.

Es ist deshalb Aufgabe der Erfindung, den Drehtrommelofen der eingangs genannten Art dahingehend weiterzubilden, daß die unter Verwendung einer feuerfesten Gieß- oder Stampfmasse hergestellten Rührkörper erheblich längere Standzeiten erzielen, ohne einen sie von innen stützenden metallischen Kern auskommen und dennoch einen ausreichend festen Halt an der Halteplatte haben.

Zur Lösung dieser Aufgabe schlägt die Erfindung ausgehend von einem Drehtrommelofen der eingangs genannten Art vor, daß die Gieß- oder Stampfmasse bis zu 50 Vol.% Stahlnadeln aus einem warmfesten Stahl enthält und dass die Halteplatte mit kurzen, in den Rührkörper ragenden Verankerungselementen versehen ist, die bei eingesetztem Rührkörper nicht über die innere Oberfläche der Ausmauerung des Ofenmantels vorstehen.

Es hat sich überraschenderweise herausgestellt, daß solche mit Stahlnadeln verstärkten, monolithisch gegossenen oder gestampften Rührkörper erheblich längere Standzeiten erreichen, als die mit einem stützenden metallischen Kern versehenen Rührkörper aus feuerfesten Gieß- oder Stampfmassen. Dies ist zum einen darauf zurückzuführen, daß die Rührkörper durch die aus warmfestem Stahl bestehenden Stahlnadeln einen starken inneren Zusammenhalt erhalten, so jedwede Rißbildung aufgrund von mechanischen Beanspruchungen oder Wärmedehnungen weitestgehend ausgeschlossen ist. Zum anderen ist das innige Gemenge aus Stahlnadeln, Bindemittel und gegebenenfalls Zuschlägen im Hinblick auf die Wärmeleitung verhältnismäßig homogen, so daß sich innerhalb der Rührkörper keine größeren Temperaturdifferenzen und damit Wärmespannungen ergeben. Schließlich werden die Oberflächen der Stahlnadeln weitestgehend von dem Bindemittel und den übrigen Zuschlägen der Gieß- oder Stampfmasse abgedeckt, so daß es nur in sehr geringem Umfang zu einem direkten Kontakt zwischen dem Stahl der Stahlnadeln und dem flüssigen Aluminium kommt.

Um den erforderlichen festen Halt des Rührkörpers auf der Halteplatte sicherzustellen, ist die Halteplatte mit kurzen, in den Rührkörper ragenden Verankerungselementen versehen, die allerdings so kurz bemessen sein müssen, daß sie bei eingebautem Rührkörper nicht über die innere Oberfläche der Ausmauerung des Drehofens vorstehen. Letzteres ist wichtig, um die oben diskutierte Rißbildung im Volumen des Rührkörpers und das Abplatzen von der Verankerung zu vermeiden.

Besonders gute Ergebnisse werden erzielt, wenn die Stahlnadeln aus einem Chrom-Nickel-Stahl bestehen mit einem Kohlenstoffgehalt von weniger als 0,15 %, einem Chromgehalt von 15 % bis 19 % und einem Nickelgehalt von 33 % bis 39 %. Ein solcher Stahl hat besonders gute warmfeste Eigenschaften und ist darüber hinaus weitestgehend korrosionsbeständig gegenüber der Atmosphäre und den Schmelzsalzen in einem Aluminiumschmelzaggregat.

Die Stahlnadeln haben vorzugsweise einen Durchmesser von 0,5 mm bis 2 mm und eine Länge von 20 mm bis 50 mm. Bei dieser Dicke und Länge der Stahlnadeln ergibt sich in allen Beanspruchungsrichtungen ein enger Verbund der erfindungsgemäßen Gieß- oder Stampfmasse.

Zur weiteren Erhöhung des inneren Zusammenhalts in der ausgehärteten Gieß- oder Stampfmasse sind die Stahlnadeln zweckmäßig mit Ausbiegungen oder Einformungen versehen. Aufgrund dieser Ausbiegungen und Einformungen verhaken sich die Stahlnadeln untereinander. Außerdem wird aufgrund dieser Ausbiegungen und Einformungen ein Formschluß zwischen den einzelnen Stahlnadeln und der sie umgebenden Einbettungsmasse hergestellt.

Zweckmäßig enthält die Gieß- oder Stampfmasse als Bindemittel einen Tonerdeschmelzzement mit einem CaO-Gehalt von weniger als 1 %. Ein derart niedriger CaO-Gehalt im Feuerbeton stellt sicher, daß bei den beim Umschmelzen für Aluminium üblichen Temperaturen (max. 1000°C) ein Aufschmelzen des Bindemittels unterbleibt.

Alternativ kann die Gieß- oder Stampfmasse auch ein chemisch abbindendes, CaO-freies Bindemittel enthalten, z. B. geeignete Kunstharze oder dergleichen.

Neben dem Bindemittel und den Stahlfasern enthält die für die Herstellung der Rührkörper verwendete Gieß- oder Stampfmasse zweckmäßig weitere feuerfeste Zuschläge auf der Basis von Al₂O₃, SiO₂ und/oder Aluminiumsilicaten. Verwendbar sind auch basische Zuschlagsstoffe wie Magnesia, Dolomit, Chrommagnesiate, Chromerz oder dergleichen.

Zweckmäßig ist weiterhin vorgesehen, daß die Rührkörper jeweils auf einer von außen in den Ofenmantel einsetzbaren Halteplatte angeordnet sind. Eine derartige Halteplatte macht es möglich, einzelne Rührkörper im Bedarfsfall von außen auswechseln zu können, ohne die Ausmauerung des Drehtrommelofens in Mitleidenschaft zu ziehen.

Nachfolgend wird ein Ausführungsbeispiel der Erfindung anhand der Zeichnung näher erläutert. Es zeigen:

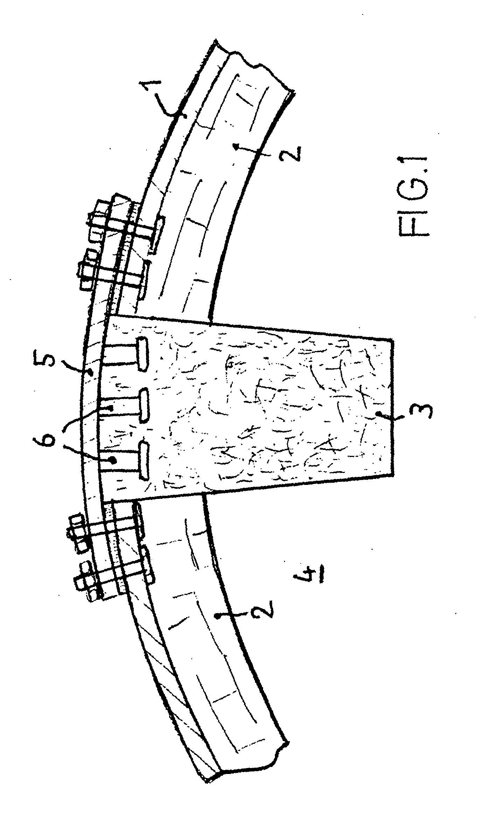

- Fig. 1:: Einen Schnitt durch einen Abschnitt des Ofenmantels eines Drehtrommelofens mit Rührkörpern gemäß der Erfindung senkrecht zur Drehachse des Drehtrommelofens;

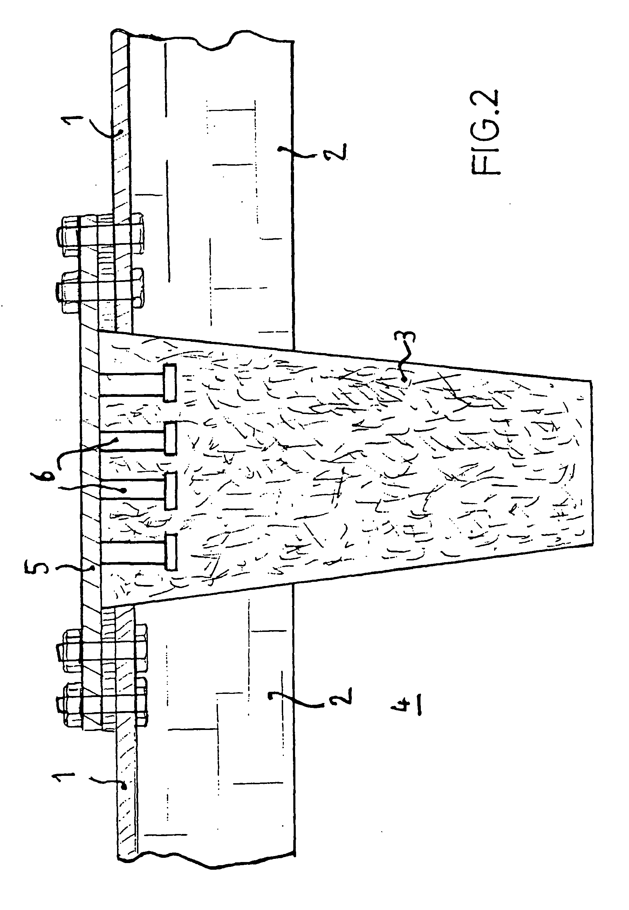

- Fig. 2:: einen Schnitt zu Figur 1 parallel zur Drehachse des Drehtrommelofens.

In der Zeichnung ist der metallische Ofenmantel des Drehtrommelofens mit dem Bezugszeichen 1 bezeichnet. Der Ofenmantel 1 ist innen mit einer Ausmauerung aus feuerfesten Steinen verkleidet. Durch diese Ausmauerung 2 hindurch ragen Rührkörper 3, die radial in den Innenraum 4 des Drehtrommelofens vorstehen. Die Rührkörper 3 bestehen aus einer ausgehärteten Gieß- oder Stampfmasse, die bis zum 50% Stahlnadeln enthält, die aus einem warmfesten Stahl hergestellt sind. Die Stahlnadeln haben einen Durchmesser von 1,8 mm und eine Länge von 40 mm. Sie bestehen aus einem Chrom-Nickel-Stahl z. B. mit der deutschen Werkstoffnummer 1.4864. Zur Erzielung eines besseren Zusammenhaltes durch Formschluß sind die Stahlnadeln mit Ausbiegungen oder Einformungen versehen.

Die Gieß- oder Stampfmasse enthält als Bindemittel einen hydraulisch abbindenden Tonerdeschmelzzement mit einem CaO-Gehalt von weniger als 1% und feuerfeste Zuschlagsstoffe auf der Basis von Al₂O₃, SiO₂ und/oder Aluminiumsilicaten.

Als Bindemittel kann anstelle von Tonerdeschmelzzement gegebenenfalls auch ein chemisch abbindendes, CaO-freies Bindemittel verwendet werden, beispielsweise ein geeignetes Kunstharz.

Der aus der Gieß- oder Stampfmasse bestehende Rührkörper 3 ist auf einer in den Ofenmantel 1 einsetzbaren Halteplatte 5 befestigt. Zur sicheren Verankerung des Rührkörpers 3 auf der Halteplatte 5 ist die Halteplatte 5 mit kurzen Ankern 6 versehen, die bei eingesetztem Rührkörper 3 nicht über die innere Oberfläche der Ausmauerung 2 des Ofenmantels 2 vorstehen. Auf diese Weise wird die Gieß- oder Stampfmasse im Bereich der Verankerung zusätzlich durch die Ausmauerung 2 gegen Abplatzen von den Ankern 6 geschützt.

## Patentansprüche

1. Drehtrommelofen zum Umschmelzen von Aluminium in einem aus einer Salzschmelze bestehenden Schutzbad, mit nach innen über die feuerfeste Ausmauerung (2) des Drehtrommelofens vorstehenden Rührkörpern (3), die jeweils an einer in den Ofenmantel (1) einsetzbaren Halteplatte (5) befestigt sind und unter Verwendung einer hydraulisch oder chemisch abbindenden feuerfesten Gieß- oder Stampfmasse hergestellt sind, **dadurch gekennzeichnet, dass** die Gieß- oder Stampfmasse bis zu 50 Vol. % Stahlnadeln aus einem warmfesten Stahl enthält und dass die Halteplatte (5) mit kurzen, in den Rührkörper (3) ragenden Verankerungselementen (6) versehen sind, die bei eingesetztem Rührkörper (3) nicht über die innere Oberfläche der Ausmauerung (2) des Ofenmantels (1) vorstehen.

2. Drehtrommelofen nach Anspruch 1, **dadurch gekennzeichnet, daß** die Stahlnadeln aus einem Chrom-Nickel-Stahl bestehen, mit einem Kohlenstoffgehalt von weniger als 0,15 %, einem Chromgehalt von 15 % bis 19 % und einem Nickelgehalt von 33 % bis 39 %.

3. Drehtrommelofen nach Anspruch 1, **dadurch gekennzeichnet, daß** die Stahlnadeln einen Durchmesser von 0,5 mm bis 2 mm und eine Länge von 20 mm bis 50 mm haben.

4. Drehtrommelofen nach den Ansprüchen 1 bis 3, **dadurch gekennzeichnet, daß** die Stahlnadeln mit Ausbiegungen oder Einformungen zur Erhöhung des Formschlusses in der ausgehärteten Gieß- oder Stampfmasse versehen sind.

5. Drehtrommelofen nach Anspruch 1, **dadurch gekennzeichnet, daß** die Gieß- oder Stampfmasse als Bindemittel eine hydraulisch abbindenden Zement mit einem CaO-Gehalt von weniger als 1% enthält.

6. Drehtrommelofen nach Anspruch 1, **dadurch gekennzeichnet, daß** die Gieß- oder Stampfmasse ein chemisch abbindendes, CaO-freies Bindemittel enthält.

7. Drehtrommelofen nach Anspruch 1, **dadurch gekennzeichnet, daß** die Gieß- oder Stampfmasse Zuschlagsstoffe auf der Basis von Al₂O₃, SiO₂ und/oder Aluminiumsilicaten enthält.

## Claims

1. A rotary drum furnace for remelting aluminium in a protective bath comprising a molten salt, having agitator bodies (3) which project inwardly beyond the refractory lining (2) of the rotary drum furnace and are respectively fixed to a holding plate (5) which can be inserted into the furnace casing (I) and are produced using a hydraulically or chemically setting refractory casting or tamping material, **characterised in that** the casting or tamping material contains up to 50 % by volume of steel needles of a heat-resistant steel and the holding plate (5) is provided with short anchoring elements (6) which project into the agitator body (3) and which when the agitator body (3) is inserted do not project beyond the inside surface of the lining (2) of the furnace casing (1).

2. A rotary drum furnace according to claim 1 **characterised in that** the steel needles comprise a chromium-nickel steel with a carbon content of less than 0.15%, a chromium content of 15% to 19% and a nickel content of 33% to 39%.

3. A rotary drum furnace according to claim 1 **characterised in that** the steel needles are of a diameter of 0.5 mm to 2 mm and a length of 20 mm to 50 mm.

4. A rotary drum furnace according to claims 1 to 3 **characterised in that** the steel needles are provided with bent-out portions or inwardly shaped portions for increasing the positively locking engagement in the hardened casting or tamping material.

5. A rotary drum furnace according to claim 1 **characterised in that** the casting or tamping material contains as binding agent a hydraulically setting cement with a CaO content of less than 1%.

6. A rotary drum furnace according to claim 1 **characterised in that** the casting or tamping material contains a chemically setting CaO-free binding agent.

7. A rotary drum furnace according to claim 1 **characterised in that** the casting or tamping material contains additives based on Al₂O₃, SiO₂ and/or aluminium silicates.

## Revendications

1. Four à tambour rotatif pour refondre de l'aluminium dans un bain de protection composé de sel fondu, avec des éléments mélangeurs (3) faisant saillie vers l'intérieur au-delà du revêtement réfractaire (2) du four à tambour rotatif, lesdits éléments étant respectivement fixés à une plaque de support (5) insérable dans la paroi du four (1) et fabriqués en utilisant une barbotine de coulage ou un pisé réfractaire à prise hydraulique ou chimique, **caractérisé en ce que** la barbotine de coulage ou le pisé contient jusqu'à 50 % en volume d'aiguilles d'acier en acier thermorésistant, et **en ce que** la plaque de support (5) est munie d'éléments d'ancrage (6) courts, dépassant dans l'élément mélangeur (3), qui ne font pas saillie au-delà de la surface intérieure du revêtement (2) de la paroi du four (1) lorsque l'élément mélangeur (3) est mis en place.

2. Four à tambour rotatif selon la revendication 1, **caractérisé en ce que** les aiguilles d'acier sont en acier au nickel-chrome, avec une teneur en carbone inférieure à 0,15 %, une teneur en chrome de 15 % à 19 % et une teneur en nickel de 33 % à 39 %.

3. Four à tambour rotatif selon la revendication 1, **caractérisé en ce que** les aiguilles d'acier présentent un diamètre de 0,5 mm à 2 mm et une longueur de 20 mm à 50 mm.

4. Four à tambour rotatif selon l'une quelconque des revendications 1 à 3, **caractérisé en ce que** les aiguilles d'acier sont munies de courbes ou de moulages pour augmenter l'engagement positif dans la barbotine de coulage ou le pisé trempé(e).

5. Four à tambour rotatif selon la revendication 1, **caractérisé en ce que** la barbotine de coulage ou le pisé contient en tant que liant un ciment à prise hydraulique avec une teneur en CaO inférieure à 1 %.

6. Four à tambour rotatif selon la revendication 1, **caractérisé en ce que** la barbotine de coulage ou le pisé contient un liant sans CaO, à prise chimique.

7. Four à tambour rotatif selon la revendication 1, **caractérisé en ce que** la barbotine de coulage ou le pisé contient des agrégats à base d'Al₂O₃, SiO₂ et/ou de silicates d'aluminium.
